# EUROPEAN PATENT APPLICATION

(11) **EP 4 678 915 A1**
(43) Date of publication of application: **14.01.2026**
(21) Application number: 24792110.9
(22) Date of filing: 19.04.2024
(51) Int. Cl.: F04B 39/00, F16F 15/04, F16F 15/08, B60H 1/00, B60N 3/10

(54) **VIBRATION DAMPING STRUCTURE FOR COMPRESSOR, AND VEHICLE-MOUNTED AIR CONDITIONER AND VEHICLE-MOUNTED REFRIGERATOR**

(30) Priority: 21.04.2023 CN 202320918872 U
(71) Applicant: Dometic Sweden AB, 171 54 Solna (SE); Dometic (Zhuhai) Technology Co., Ltd., Zhuhai, Guangdong 519041 (CN)
(72) Inventor: CHEN, Jianmin, Zhuhai, Guangdong 519041 (CN); GUO, Shaohong, Zhuhai, Guangdong 519041 (CN)
(74) Representative: Grosse, Felix Christopher
(86) International application number: PCT/CN2024/088742
(87) International publication number: WO 2024/217525

(57) **Abstract**

In a first aspect, the present disclosure relates to a compressor damping structure, including: a first damping structure including a first fixing plate and a plurality of first damping pads, where a compressor is mounted and fixed to the first fixing plate via the plurality of first damping pads; a second damping structure including a second fixing plate and a plurality of second damping pads, where the first fixing plate, to which the compressor is mounted and fixed, is mounted and fixed to the second fixing plate via the plurality of second damping pads; and a third damping structure, where the first fixing plate includes a corrugated elastic structure, and the third damping structure includes the corrugated elastic structure of the first fixing plate. The present disclosure further relates to a vehicle-mounted air conditioner and/or a vehicle-mounted refrigerator including the compressor damping structure according to the first aspect.

## Description

### TECHNICAL FIELD

The present disclosure relates to the field of vehicle-mounted electrical appliances, and particularly to a compressor damping structure, a vehicle-mounted air conditioner and a vehicle-mounted refrigerator.

### BACKGROUND ART

A vehicle-mounted electrical appliance, for example, a vehicle-mounted air conditioner or a vehicle-mounted refrigerator, is different from a common household appliance, the vehicle-mounted air conditioner or the vehicle-mounted refrigerator is mounted on a vehicle and moves together with the vehicle, and various vehicle conditions, such as road bumps and braking, cause a compressor of the vehicle-mounted air conditioner or the vehicle-mounted refrigerator to be subjected to vibration and shock in different directions. However, a conventional damping system has a limited damping effect, cannot meet complex and variable damping requirements of the compressor of the vehicle-mounted air conditioner or the vehicle-mounted refrigerator.

### SUMMARY

The present disclosure aims to provide a compressor damping structure capable of improving a damping effect, and a vehicle-mounted air conditioner and a vehicle-mounted refrigerator that include the compressor damping structure.

According to a first aspect, the present disclosure provides a compressor damping structure, which includes: a first damping structure, which includes a first fixing plate and a plurality of first damping pads, where a compressor is mounted and fixed to the first fixing plate by means of the plurality of first damping pads; a second damping structure, which includes a second fixing plate and a plurality of second damping pads, where the first fixing plate, to which the compressor is mounted and fixed, is mounted and fixed to the second fixing plate by means of the plurality of second damping pads; and a third damping structure, where the first fixing plate includes a corrugated elastic structure, and the third damping structure includes the corrugated elastic structure of the first fixing plate.

By additionally introducing the third damping structure which includes the corrugated elastic structure of the first fixing plate on the basis of the first damping structure and the second damping structure, the compressor damping structure of the present disclosure can provide a further stage of damping by means of the third damping structure in addition to two stages of damping, and accordingly provide a better damping effect. Moreover, since the damping structure is formed by an elastic configuration provided by means of the corrugated elasticity of the first fixing plate itself, additional excessive fixing plates and damping pads in the case of introducing more stages of damping are omitted, and accordingly the number of components of the compressor damping structure and a resulting cost problem can be better controlled while the damping effect is improved.

According to an aspect of the present disclosure, the corrugated elastic structure includes a curved or a fold structure.

According to an aspect of the present disclosure, the corrugated elastic structure is disposed at a position where the structure cooperates with each of the first damping pads, thus enabling a lower end portion of each of the first damping pads to be fixed to an upper portion of the corrugated elastic structure.

According to an aspect of the present disclosure, the corrugated elastic structure is disposed at a position where the structure cooperates with each of the second damping pads, thus enabling an upper end portion of each of the second damping pads to be fixed to a lower portion of the corrugated elastic structure or fixed close to the lower portion of the corrugated elastic structure.

According to an aspect of the present disclosure, the first fixing plate includes a first intermediate portion and second side portions located on two sides of the first intermediate portion, each of the second side portions is higher than the first intermediate portion, and the first intermediate portion transitions to the second side portion by means of an upwardly inclined portion; where the compressor is mounted and fixed to the first intermediate portion of the first fixing plate by means of the plurality of first damping pads, and the first fixing plate, to which the compressor is mounted and fixed, is mounted and fixed to the second fixing plate by means of the second side portions and the plurality of second damping pads.

According to an aspect of the present disclosure, a length of the corrugated elastic structure depends on a thickness of the first fixing plate.

According to an aspect of the present disclosure, the first fixing plate has a thickness of 0.7 mm to 1.2 mm.

According to an aspect of the present disclosure, the first damping pad and the second damping pad each are a rubber damping pad or a pre-loaded spring damping pad.

According to a second aspect, the present disclosure provides a vehicle-mounted air conditioner, which relates to a type of air conditioner including an overhead unit, a type of air conditioner including a floor-mounted unit and a type of air conditioner including a split unit; where the overhead unit, the floor-mounted unit and the split unit each include a compressor damping structure according to the first aspect of the present disclosure, and where the second fixing plate is a chassis for the overhead unit, the floor-mounted unit or the split unit.

According to a third aspect, the present disclosure provides a vehicle-mounted refrigerator, where the vehicle-mounted refrigerator includes a compressor damping structure according to the first aspect of the present disclosure, and where the second fixing plate is a bottom plate of the vehicle-mounted refrigerator.

### BRIEF DESCRIPTION OF THE DRAWINGS

The present disclosure will be further described below with reference to the accompanying drawings and embodiments. In the accompanying drawings:
FIG. 1 shows a first embodiment of a compressor damping structure according to a first aspect of the present disclosure;
FIG. 2 shows a second embodiment of the compressor damping structure according to the first aspect of the present disclosure;
FIG. 3 shows a third embodiment of the compressor damping structure according to the first aspect of the present disclosure; and
FIG. 4 shows a fourth embodiment of the compressor damping structure according to the first aspect of the present disclosure.

### DETAILED DESCRIPTION OF THE EMBODIMENTS

The embodiments of the present disclosure will be described in detail below, and examples of the embodiments are shown in the accompanying drawings, in which the same or similar reference signs refer to the same or similar elements or elements having the same or similar functions. The embodiments described below with reference to the accompanying drawings are exemplary and are intended to be illustrative of the present disclosure, but should not be construed as limiting the present disclosure.

A compressor damping structure according to a first aspect of the present disclosure will be described below with reference to the accompanying drawings.

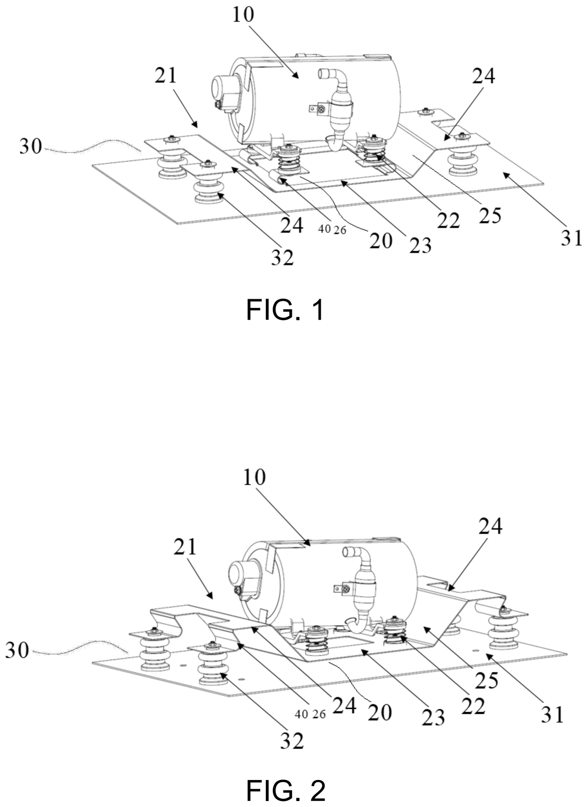

FIG. 1 shows a first embodiment of a compressor damping structure according to a first aspect of the present disclosure. Specifically, the compressor damping structure in the first embodiment includes a first damping structure 20, a second damping structure 30 and a third damping structure 40. The first damping structure 20 includes a first fixing plate 21 and a plurality of first damping pads 22, where the first fixing plate 21 includes a first intermediate portion 23 and second side portions 24 located on two sides of the first intermediate portion, and each of the second side portions 24 is higher than the first intermediate portion 23, where the first intermediate portion 23 transitions to the second side portion 24 by means of an upwardly inclined portion 25; the first intermediate portion 23 includes a corrugated elastic structure 26 in a curved or fold shape (e.g., extending upwardly from the first intermediate portion), and such a corrugated elastic structure provides an elastic configuration to form the third damping structure 40; as an upper end portion of each of the plurality of first damping pads is mounted and fixed to a mount of a compressor 10, and a lower end portion of each of the plurality of first damping pads is fixed to an upper portion of the corrugated elastic structure 26 (e.g., a horizontal upper portion), the compressor is mounted and fixed to the first fixing plate 21; and the second damping structure 30 includes a second fixing plate 31 and a plurality of second damping pads 32, upper end portions of the plurality of second damping pads are mounted and fixed to the first fixing plate 21, and lower end portions of the plurality of second damping pads are mounted and fixed to the second fixing plate 31.

The first damping structure and the second damping structure provides two stages of damping, and the third damping structure formed by means of the elastic configuration provided by the first intermediate portion of the first fixing plate having its own corrugated elasticity provides a third stage of damping, thereby providing a better damping effect on the compressor. Moreover, since the damping structure is formed by an elastic structure provided by means of the corrugated elasticity of the first fixing plate itself, additional excessive fixing plates and damping pads in the case of introducing more stages of damping are omitted, and accordingly the number of components of the compressor damping structure and a resulting cost problem can be better controlled while the damping effect is improved. In addition, the first fixing plate adopts a structure featuring a lower middle and two higher sides, with inclined surfaces providing transitions, and the compressor is fixed to the intermediate portion, so that even in the case of introducing a multi-stage damping structure, a mounting height of the compressor is also not unduly affected, and the trafficability of a vehicle can be ensured when an overhead unit of a vehicle-mounted air conditioner, for example, using the compressor damping structure, is mounted on a vehicle roof.

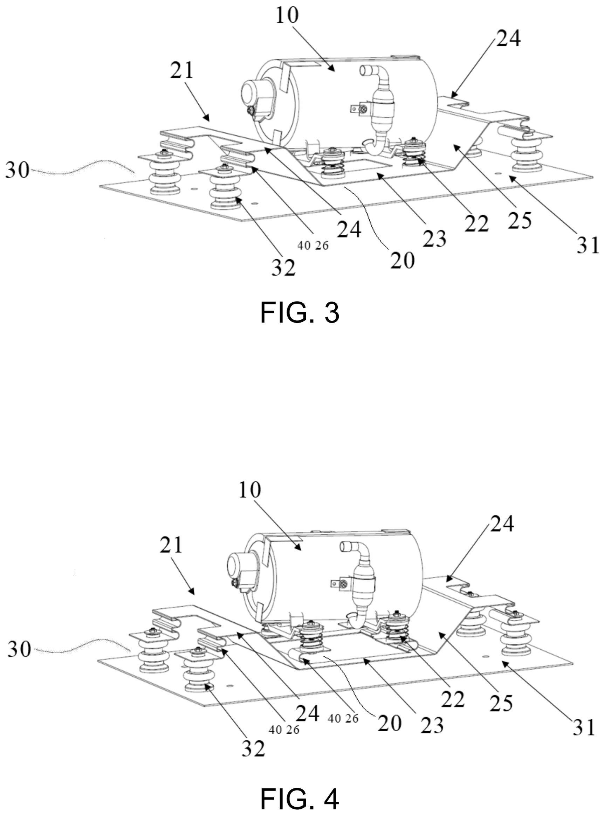

FIGS. 2 and 3 show second and third embodiments of the compressor damping structure according to the first aspect of the present disclosure. Specifically, the compressor damping structure in the second and third embodiments includes a first damping structure 20, a second damping structure 30 and a third damping structure 40. The first damping structure 20 includes a first fixing plate 21 and a plurality of first damping pads 22, where the first fixing plate 21 includes a first intermediate portion 23 and second side portions 24 located on two sides of the first intermediate portion, each of the second side portions 24 is higher than the first intermediate portion 23, and the first intermediate portion 23 transitions to the second side portion 24 by means of an upwardly inclined portion 25; as an upper end portion of each of the plurality of first damping pads is mounted and fixed to a mount of a compressor 10, and a lower end portion of each of the plurality of first damping pads is fixed to the first intermediate portion 23, the compressor is mounted and fixed to the first fixing plate 21; and the second damping structure 30 includes a second fixing plate 31 and a plurality of second damping pads 32, and the third damping structure 40 includes a corrugated elastic structure 26, for example, in a curved or fold shape, extending downwardly from the second side portion 24 (e.g., a corrugated elastic structure having one curved or fold shape is showed schematically in the second embodiment, and a corrugated elastic structure having two curved or fold shapes is showed schematically in the third embodiment), where an upper end portion of each of the plurality of second damping pads 32 is mounted and fixed to a lower portion of the corrugated elastic structure 26 or fixed close to the lower portion of the corrugated elastic structure (e.g., a position extending horizontally from the lower portion), and a lower end portion of each of the plurality of second damping pads 32 is mounted and fixed to the second fixing plate 31.

The first damping structure and the second damping structure provide two stages of damping, and the third damping structure formed by means of the elastic configuration provided by the second side portion of the first fixing plate having its own corrugated elasticity provides a third stage of damping, thereby providing a better damping effect on the compressor. Moreover, since the damping structure is formed by an elastic structure provided by means of the corrugated elasticity of the first fixing plate itself, additional excessive fixing plates and damping pads in the case of introducing more stages of damping are omitted, and accordingly the number of components of the compressor damping structure and a resulting cost problem can be better controlled while the damping effect is improved.

FIG. 4 shows a fourth embodiment of the compressor damping structure according to the first aspect of the present disclosure. Specifically, the compressor damping structure in the fourth embodiment includes a first damping structure 20, a second damping structure 30 and a third damping structure 40. The first damping structure 20 includes a first fixing plate 21 and a plurality of first damping pads 22, where the first fixing plate 21 includes a first intermediate portion 23 and second side portions 24 located on two sides of the first intermediate portion, each of the second side portions 24 is higher than the first intermediate portion 23, and the first intermediate portion 23 transitions to the second side portion 24 by means of an upwardly inclined portion 25; the first intermediate portion 23 includes a corrugated elastic structure 26 in a curved or fold shape (e.g., extending upwardly from the first intermediate portion), and such a corrugated elastic structure provides an elastic configuration to form a first portion of the third damping structure 40; as an upper end portion of each of the plurality of first damping pads is mounted and fixed to a mount of a compressor 10, and a lower end portion of each of the plurality of first damping pads is fixed to an upper portion of the corrugated elastic structure 26 (e.g., a horizontal upper portion), the compressor is mounted and fixed to the first fixing plate 21; the second damping structure 30 includes a second fixing plate 31 and a plurality of second damping pads 32; a corrugated elastic structure 26, for example, in a curved or fold shape, extending downwardly from the second side portion 24 provides an elastic configuration to form a second portion of the third damping structure 40; where an upper end portion of each of the plurality of second damping pads 32 is mounted and fixed to a lower portion of the corrugated elastic structure 26 of the second side portion or fixed close to the lower portion of the corrugated elastic structure (e.g., a position extending horizontally from the lower portion), and a lower end portion of each of the plurality of second damping pads 32 is mounted and fixed to the second fixing plate 31.

The first damping structure and the second damping structure provide two stages of damping, the first portion of the third damping structure formed by means of the elastic configuration provided by the first intermediate portion of the first fixing plate having its own corrugated elasticity provides a third stage of damping, and the second portion of the third damping structure formed by means of the elastic configuration provided by the second side portion having the corrugated elasticity itself provides a fourth stage of damping, thereby providing a better damping effect on the compressor.

Additionally or alternatively, in an implementation of the compressor damping structure according to the first aspect of the present disclosure, for example, optionally, the first fixing plate may have a thickness ranging from about 0.7 mm to 1.2 mm, which can advantageously ensure that: when the first fixing plate forms the corrugated elastic structure itself, such a corrugated elastic structure can provides an elastic configuration. For example, a length of the corrugated elastic structure may be changed as the thickness of the first fixing plate changes, for example, as the thickness increases, the length of the corrugated elastic structure may be increased to provide a suitable elastic configuration.

Additionally or alternatively, in an implementation of the compressor damping structure according to the first aspect of the present disclosure, for example, optionally, the first damping pad and the second damping pad each may be in various forms, such as a rubber damping pad or a pre-loaded spring damping pad.

According to a second aspect, the present disclosure provides a vehicle-mounted air conditioner, which relates to an integrated air conditioner and a split air conditioner, where the integrated air conditioner includes a roof-mounted air conditioner, that is, including a type of air conditioner including an overhead unit, and a floor-mounted air conditioner, that is, a type of air conditioner including a floor-mounted unit, while the split air conditioner is similar to a domestic air conditioner structure including internal and external units, that is, a type of air conditioner including a split unit; where the overhead unit, the floor-mounted unit and the split unit may each include a compressor damping structure according to the first aspect of the present disclosure, and where the second fixing plate is a chassis for the overhead unit, the floor-mounted unit or the split unit. The vehicle-mounted air conditioner has the compressor damping structure as described above, so that the damping effect is improved, and safety is ensured.

According to a third aspect, the present disclosure provides a vehicle-mounted refrigerator, where the vehicle-mounted refrigerator includes a compressor damping structure according to the first aspect of the present disclosure, and where the second fixing plate is a bottom plate of the vehicle-mounted refrigerator. The vehicle-mounted refrigerator has the compressor damping structure as described above, so that the damping effect is improved, and safety is ensured.

The foregoing description is merely the preferred embodiments of the present disclosure and is not intended to limit the present disclosure, and various changes and modifications may be made by those skilled in the art. Any modifications, equivalent substitutions, improvements, etc. made within the spirit and principles of the present disclosure shall fall within the scope of protection of the present disclosure.

## Claims

1. A compressor damping structure, comprising:
a first damping structure, which comprises a first fixing plate and a plurality of first damping pads, wherein a compressor is mounted and fixed to the first fixing plate by means of the plurality of first damping pads;
a second damping structure, which comprises a second fixing plate and a plurality of second damping pads, wherein the first fixing plate, to which the compressor is mounted and fixed, is mounted and fixed to the second fixing plate by means of the plurality of second damping pads; and
a third damping structure, wherein the first fixing plate comprises a corrugated elastic structure, and the third damping structure comprises the corrugated elastic structure of the first fixing plate.

2. The compressor damping structure according to claim 1, wherein the corrugated elastic structure comprises a curved or fold structure.

3. The compressor damping structure according to claim 1 or 2, wherein the corrugated elastic structure is disposed at a position where the structure cooperates with each of the first damping pads, thus enabling a lower end portion of each of the first damping pads to be fixed to an upper portion of the corrugated elastic structure.

4. The compressor damping structure according to claim 1 or 2, wherein the corrugated elastic structure is disposed at a position where the structure cooperates with each of the second damping pads, thus enabling an upper end portion of each of the second damping pads to be fixed to a lower portion of the corrugated elastic structure or fixed close to the lower portion of the corrugated elastic structure.

5. The compressor damping structure according to claim 1, wherein the first fixing plate comprises a first intermediate portion and second side portions located on two sides of the first intermediate portion, each of the second side portions is higher than the first intermediate portion, and the first intermediate portion transitions to the second side portion by means of an upwardly inclined portion; wherein the compressor is mounted and fixed to the first intermediate portion of the first fixing plate by means of the plurality of first damping pads, and the first fixing plate, to which the compressor is mounted and fixed, is mounted and fixed to the second fixing plate by means of the second side portions and the plurality of second damping pads.

6. The compressor damping structure according to claim 1 or 2, wherein a length of the corrugated elastic structure depends on a thickness of the first fixing plate.

7. The compressor damping structure according to claim 6, wherein the first fixing plate has a thickness of 0.7 mm to 1.2 mm.

8. The compressor damping structure according to claim 1, wherein the first damping pad and the second damping pad each are a rubber damping pad or a pre-loaded spring damping pad.

9. A vehicle-mounted air conditioner, comprising an overhead unit, wherein the overhead unit comprises a compressor damping structure according to any one of claims 1 to 8, and the second fixing plate is a chassis of the overhead unit.

10. A vehicle-mounted air conditioner, comprising a floor-mounted unit, wherein the floor-mounted unit comprises a compressor damping structure according to any one of claims 1 to 8, and the second fixing plate is a chassis of the floor-mounted unit.

11. A vehicle-mounted air conditioner, comprising a split unit, wherein the split unit comprises a compressor damping structure according to any one of claims 1 to 8, and the second fixing plate is a chassis of the split unit.

12. A vehicle-mounted refrigerator, comprising a compressor damping structure according to any one of claims 1 to 8, wherein the second mounting plate is a bottom plate of the vehicle-mounted refrigerator.
